# FASCICULE DE BREVET EUROPEEN

(11) **EP 1 630 468 B1**
(45) Date de publication et mention de la délivrance du brevet: **19.12.2012**
(21) Numéro de dépôt: 05291592.3
(22) Date de dépôt: 26.07.2005
(51) Int. Cl.: F16M 7/00, F04D 13/08, F04D 29/60, E03F 5/22

(54) **Famille de pompes**
Pumpenbaureihe
Pump assembly

(30) Priorité: 27.08.2004 FR 0409136
(43) Date de publication de la demande: 01.03.2006
(73) Titulaire: KSB S.A.S, 92230 Gennevilliers (FR)
(72) Inventeur: Smis, Martial, 62840 Sailly sur la Lys (FR); Symoens, Louis, 59155 Faches Thumesnil (FR)
(74) Mandataire: Eidelsberg, Victor Albert

(56) Documents cités:
- DE-A1- 3 124 311
- DE-A1- 19 718 599
- DE-U1- 29 702 112
- DE-U1- 29 710 766
- US-A- 3 771 915
- US-A- 3 880 553
- US-A- 5 906 479
- US-A1- 2003 133 815

## Description

Quand on veut adapter des pompes de relevage dans le fond d'une fosse de pompage, on doit fixer un pied d'assise, adapté au diamètre de refoulement de la pompe, voir par example le document DE-A-3 124 311. Celui ci sera maintenu avec des chevilles de fixation, mécaniques ou chimiques, compatibles avec les efforts que celles ci doivent reprendre.

Si les stations sont des stations préfabriquées, celles ci ne peuvent être équipées de leurs pieds d'assise et leurs accessoires que lorsque les pompes qui sont susceptibles d'y être placées, sont définies.

Si une modification des caractéristiques de la station nécessite une pompe de taille avec un diamètre de refoulement différent de celui prévu à l'origine, il est nécessaire de modifier la position de la totalité ou d'une partie des chevilles de fixation.

L'invention pallie cet inconvénient en permettant de fixer au fond d'une fosse des pieds d'assise destinés à des pompes de dimensions différentes, sans avoir à modifier la position des points de fixation du pied d'assise quelle qu'elle soit au fond de la fosse.

L'invention est définie à la revendication.

Les trous de fixation peuvent être aussi des encoches. Le système de guidage peut être constitué d'une barre, d'une chaîne ou aussi de deux câbles. Dans ce dernier cas, l'axe du système est la verticale au milieu des deux câbles.

En prévoyant une semelle qui dépasse du corps du côté opposé à l'orifice d'entrée et en ménageant les trous de fixation dans la semelle, on se donne la possibilité de conserver la position des trous de fixation par rapport au fond de la fosse et donc de conserver les points de fixation au fond de la fosse quelle que soit la dimension du pied d'assise utilisé. On peut maintenant, au moins pour une certaine gamme de pompes, remplacer un pied d'assise destiné à une pompe de grande dimension et dans laquelle les trous de fixation ont un empattement qui est grand en conséquence par un pied d'assise plus petit destiné à une pompe de plus petite dimension, qui, malgré tout, a des trous de fixation ayant le même empattement puisqu'ils sont ménagés dans la semelle de dimensions indépendantes de celles du pied d'assise soi-même. Bien entendu, on peut aussi remplacer un pied d'assise destiné à une pompe de petite dimension par un pied d'assise destiné à une pompe de grande dimension.

Suivant un mode de réalisation, la semelle est rapportée sur le corps. Cela permet notamment de transformer des pieds d'assise existants en des pieds d'assise suivant l'invention et d'avoir une même semelle pour tous les pieds d'assise.. Suivant un autre mode de réalisation préféré, la semelle est d'une pièce avec le corps, ce qui simplifie la fabrication du pied d'assise.

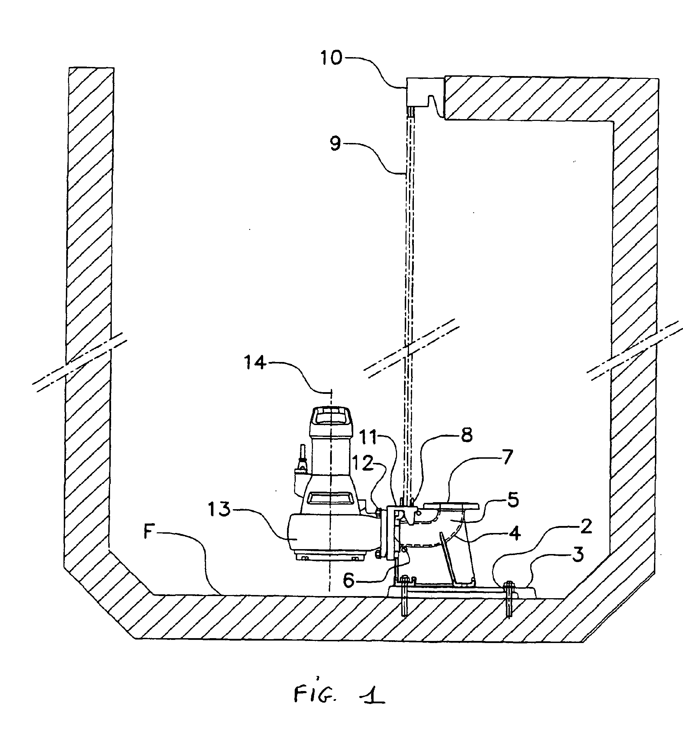

La Figure unique du dessin annexé est une vue en élévation d'une pompe ayant un pied d'assise placé dans une fosse.

Dans une fosse F est fixée dans quatre trous d'ancrage par quatre chevilles pénétrant dans des encoches 2 ménagées sur une semelle 3, un pied d'assise qui comporte, outre la semelle 3, un corps 4 creux dans lequel est ménagé un passage 5 ayant un orifice 6 d'entrée d'axe horizontal et un orifice 7 de sortie d'axe vertical. La semelle 3 est adjacente par sa face supérieure à la face inférieure plane du corps 4.

Il est prévu, en outre, dans le corps 4 un trou borgne 8 de réception d'une barre 9 de guidage tenue en haut par une console 10 fixée au bord supérieur de la fosse F.

Sur la barre 9 peut coulisser une griffe 11 en équerre, dont la branche horizontale coulisse sur la barre 9, tandis que la barre verticale de l'équerre 11 est boulonnée par des boulons 12 à une pompe 13 d'axe 14 vertical.

Pour mettre la pompe en place dans la fosse F, on fait descendre la griffe 11 à laquelle est boulonnée la pompe 13 jusqu'à ce que la griffe vienne en appui sur le corps 4 de sorte que la tubulure de refoulement de la pompe vienne dans le prolongement de l'orifice 6 d'entrée.

Lorsque l'on estime que la pompe 13 ne convient plus pour vider la fosse et lorsque on veut la remplacer par une pompe d'une autre dimension, d'un autre diamètre de tubulure de refoulement par exemple, on retire l'ensemble de la pompe 13, de la griffe 11 et du pied d'assise et l'on fixe un autre pied d'assise au fond de la fosse F, mais en utilisant les mêmes trous d'ancrage grâce au fait que le nouveau pied d'assise a lui aussi une semelle 3 de même dimension que la semelle 3 du premier pied d'assise et, en tout cas et surtout, ayant quatre encoches 2 de fixation situées en les mêmes positions par rapport au fond de la fosse F que celles du premier pied d'assise. On fixe ainsi ce nouveau pied d'assise de dimension différente en la même position du point de vue de l'ancrage que le premier pied d'assise, puis l'on remonte sur ce pied d'assise par coulissement le long de la barre 9, l'ensemble de la nouvelle pompe boulonné à une griffe. On n'a pas ainsi pour changer la pompe à prévoir de nouveaux trous de fixation dans la fosse F.

## Revendications

1. Famille de pompes, comprenant au moins un premier type de pompe ayant un premier diamètre de la tubulure de refoulement et un deuxième type de pompe ayant un deuxième diamètre de la tubulure de refoulement, le deuxième diamètre étant supérieur ou égale au premier, le premier type de pompe étant associé à un premier type de pied d'assise et le deuxième type de pompe à un deuxième type de pied d'assise différent du premier type de pied d'assise, chaque pied d'assise ayant une semelle (3), munie d'au moins trois trous (2) de fixation, et un système de guidage d'axe vertical, **caractérisée en ce que** la distance, décomptée dans un plan horizontal, entre deux trous (2) de fixation quelconque est la même quel que soit le type de pied d'assise et la distance, décomptée dans le plan horizontal, entre l'un quelconque des trous (2) de fixation et l'axe vertical du système (9) de guidage est la même quel que soit le type de pied d'assise.

2. Famille de pompes suivant la revendication 1, **caractérisée en ce que** la semelle (3) dépasse du corps (4) de pompe, du côté opposé à un orifice (6) d'entrée, quel que soit le type de pied d'assise.

## Claims

1. A pump assembly comprising at least one first type of pump having a first diameter of the delivery pipe and a second type of pump having a second diameter of the delivery pipe, the second diameter being greater than or equal to the first, the first type of pump being associated with a first type of seat base and the second type of pump being associated with a second type of seat base that is different from the first type of seat base, each seat base having a sole plate (3) that is equipped with at least three fixing holes (2), and a vertical-axis guiding system, **characterised in that** the distance, calculated in a horizontal plane, between any two fixing holes (2) is the same regardless of the type of seat base, and the distance, calculated in the horizontal plane, between any one of the fixing holes (2) and the vertical axis of the guiding system (9) is the same regardless of the type of seat base.

2. A pump assembly according to claim 1, **characterised in that** the sole plate (3) passes beyond the pump body (4) on the side opposite an inlet opening (6) regardless of the type of seat base.

## Patentansprüche

1. Pumpenfamilie, umfassend wenigstens einen ersten Pumpentyp, der einen ersten Durchmesser des Druckrohrstutzens aufweist, sowie einen zweiten Pumpentyp, der einen zweiten Durchmesser des Druckrohrstutzens aufweist, wobei der zweite Durchmesser größer als der erste oder gleich dem ersten ist, wobei der erste Pumpentyp einem ersten Typ eines Auflagefußes zugeordnet ist und der zweite Pumpentyp einem von dem ersten Typ des Auflagefußes abweichenden zweiten Typ eines Auflagefußes zugeordnet ist, wobei jeder Auflagefuß eine Grundplatte (3), die mit wenigstens drei Befestigungslöchern (2) versehen ist, und ein Führungssystem mit vertikaler Achse aufweist, **dadurch gekennzeichnet, dass** der in einer horizontalen Ebene gemessene Abstand zwischen zwei beliebigen Befestigungslöchern (2) unabhängig vom Typ des Auflagefußes der gleiche ist und der in der horizontalen Ebene gemessene Abstand zwischen irgendeinem der Befestigungslöcher (2) und der vertikalen Achse des Führungssystems (9) unabhängig vom Typ des Auflagefußes der gleiche ist.

2. Pumpenfamilie nach Anspruch 1, **dadurch gekennzeichnet, dass** unabhängig vom Typ des Auflagefußes die Grundplatte (3) den Pumpenkörper (4) auf der von einer Eintrittsöffnung (6) abgewandten Seite überragt.
